(19) **Europäisches Patentamt European Patent Office Office européen des brevets**

(11) **EP 1 559 923 B1**

(12) **EUROPEAN PATENT SPECIFICATION**

(45) Date of publication and mention
of the grant of the patent:
**28.02.2007 Bulletin 2007/09**

(51) Int Cl.:
***F16D 48/06*** (2006.01)

(21) Application number: **05001812.6**

(22) Date of filing: **28.01.2005**

(54) **Clutch control apparatus**

Kupplungssteuervorrichtung

Dispositif de commande d'embrayage

(84) Designated Contracting States:
**DE FR GB**

(30) Priority: **30.01.2004 JP 2004023346**

(43) Date of publication of application:
**03.08.2005 Bulletin 2005/31**

(73) Proprietor: **AISIN SEIKI KABUSHIKI KAISHA
Kariya-shi, Aichi-ken 448-8650 (JP)**

(72) Inventors:
• **Mineno, Akira
IPD AISIN SEIKI KABUSHIKI KAISHA
Kariya-shi
Aichi-ken, 448-8650 (JP)**

• **Terakawa, Tomomitsu
IPD AISIN SEIKI K.K.
Kariya-shi
Aichi-ken, 448-8650 (JP)**

(74) Representative: **Kramer - Barske - Schmidtchen
European Patent Attorneys
Patenta
Radeckestrasse 43
81245 München (DE)**

(56) References cited:
**DE-A1- 10 126 080     DE-A1- 10 230 611
FR-A- 2 854 848**

**Description**

FIELD OF THE INVENTION

This invention generally relates to a clutch control apparatus capable of changing an engagement condition between a clutch disc and a flywheel by control of the driving of an actuator.

BACKGROUND

An automated manual transmission (herein, referred to as an AMT) has been known, which incorporates a manual transmission with a conventional structure, which is provided with an actuator. A series of shift operations including an engagement and disengagement of a clutch, a shift operation of a shift stage in the transmission and a select operation thereof is automated in response to an intention of a driver to shift, or in response to a vehicle driving condition. In this type of automated manual transmission, a clutch operation is controlled by, for example, converting into a clutch stroke that could be regarded as a control amount by an actuator, a clutch torque required in light of vehicle attributes/characteristics.

In an event that the AMT is delivered from a factory, a relationship between the clutch torque and the clutch stroke can be determined statically on the basis of factors such as a cushioning characteristic of a clutch disc. However, in an event that the AMT is mounted on an actual vehicle, experience have taught that the relationship therebetween is influenced largely by dynamic fluctuation factors such as friction of clutch facings, fluctuations of a frictional coefficient thereof due to heat generation and aged deterioration thereof. In light of the foregoing, inventors of the present invention have suggested several types of methods or technologies, whereby a relationship between a clutch torque and a clutch stroke is learned on a steady basis, and a clutch torque map defining the relationship is corrected. These technologies have been disclosed in Japanese Patent Application No. 2002-304105 and Japanese Patent Application No. 2003-192703.

In the above-described methods, results of learning, i.e., the relationship between a clutch torque and a clutch stroke that is obtained once a shift operation is started while the clutch has been engaged, are not reflected or considered, and results of learning exhibit an inadequate degree of reflection. This is because, even when, in cases of both a shift operation and a vehicle start, a clutch has been engaged, and a learning condition has been satisfied, characteristics relevant to the relationship between a clutch torque and a clutch stroke during a shift operation is different at a great deal from characteristics relevant to that during a vehicle start. In such circumstances, if an identical logic is applied during both a shift operation and a vehicle start, it may not be possible to attain preferable learning results. For example, if a method of learning suggested in a first embodiment disclosed in the Japanese Patent Application 2003-192703 is likewise applied during a shift operation, a correction ratio, i.e., a correction coefficient, at a relatively high clutch torque range tends to be controlled at an excessively small level. Further, according to a second embodiment disclosed in this application, learning results are designed not to be reflected at a relatively high clutch torque range.

As described above, according to the conventional learning method of learning a relationship between a clutch torque and a clutch stroke, a frequency of learning and improvement of precision of learning a torque map may be limited. Further, in such cases, there may be a fear that, at a high clutch torque range such as a kick-down shift operation, learning the relationship between a clutch torque and a clutch stroke may not be implemented sufficiently, whereupon sufficient learning results may not be reflected or considered.

DE 102 30 611 A1 refers to a clutch control method which uses for definition of a desired clutch torque a vehicle start clutch torque map which is adapted to different vehicle conditions such that the driver's requests for starting a vehicle are taken into account.

DE 101 26 080 A1 refers to a method for controlling an automatic clutch of a vehicle. The torque transferred by the clutch ($M_{clutch}$) is detected and compared to the requested torque $M_{des}$. An adaptive correction coefficient is calculated which serves for adapting the actual clutch torque to the desired torque. The actual torque $M_{clutch}$ is calculated from the characteristics of the rotational speed of a torque generator and the clutch.

The present invention has been made in view of the above circumstances, and provides a clutch control apparatus, which is capable of learning and reflecting above-described dynamic fluctuation factors, and is capable of controlling a clutch torque preferably.

SUMMARY OF THE INVENTION

According to an aspect of the present invention, a clutch control apparatus controlling a clutch torque to a target clutch torque by control of a driving of an actuator at a target control amount corresponding to the target clutch torque is characterized in including the features of claim 1, in particular: a correction coefficient calculating unit configured to calculate, when a predetermined feedback-type learning condition has been satisfied, a correction coefficient for correcting the target clutch torque on the basis of a difference between the target clutch torque and an estimated clutch torque output in an event that the driving of the actuator is controlled at the target control amount corresponding to the target clutch torque; and a target clutch torque correcting unit configured to correct the target clutch torque on the basis of the correction coefficient. By the way, the correction coefficient is calculated irrespective of whether a vehicle has started or a shift operation has implemented.

The correction coefficient calculating unit corrects the correction coefficient to be increased proportionately with a level of an engine rotational speed once the predetermined learning condition has been satisfied during a clutch engaged condition when a shift stage in a transmission is shifted to another shift stage in the transmission.

Preferred embodiments are defined by the dependent claims.

BRIEF DESCRIPTION OF THE DRAWING

The foregoing and additional features and characteristics of the present invention will become more apparent from the following detailed description considered with reference to the accompanying drawings, wherein:

Fig. 1 is a view schematically illustrating a vehicle control system incorporating a clutch control apparatus according to an embodiment of the present invention;

Fig. 2 is a diagram illustrating a clutch torque map of a clutch torque and a clutch stroke according to the embodiment of the present invention;

Fig. 3 is a time chart for explaining changes in a vehicle condition at a time that a vehicle starts according to the embodiment of the present invention;

Fig. 4A is a time chart for explaining variations in an engine rotational speed within a range, in which a learning condition is satisfied, according to the embodiment of the present invention;

Fig. 4B is a time chart for explaining variations in a correction ratio Kh within the range, in which a learning condition is satisfied, according to the embodiment of the present invention;

Fig. 5 illustrates a repeatedly corrected clutch torque map, which has been produced, in terms of plural learning points, by calculating a reference ratio irrespective of whether or not those learning points are large;

Fig. 6 illustrates a repeatedly corrected clutch torque map, which has been produced, in terms of plural learning points, by calculating reference ratios in consideration of whether or not those learning points are large;

Fig. 7 is a time chart for explaining changes in a vehicle condition at a time that a shift operation is implemented according to the embodiment of the present invention;

Fig. 8A is a time chart for explaining variations in an engine rotational sped within a range in which the learning condition is satisfied; and

Fig. 8B is a time chart for explaining variations in a correction ratio calculated without being applied with correction according to the embodiment of the present invention.

DETAILED DESCRIPTION

An embodiment of the present invention will be described in detail below with reference to the accompanying drawings.

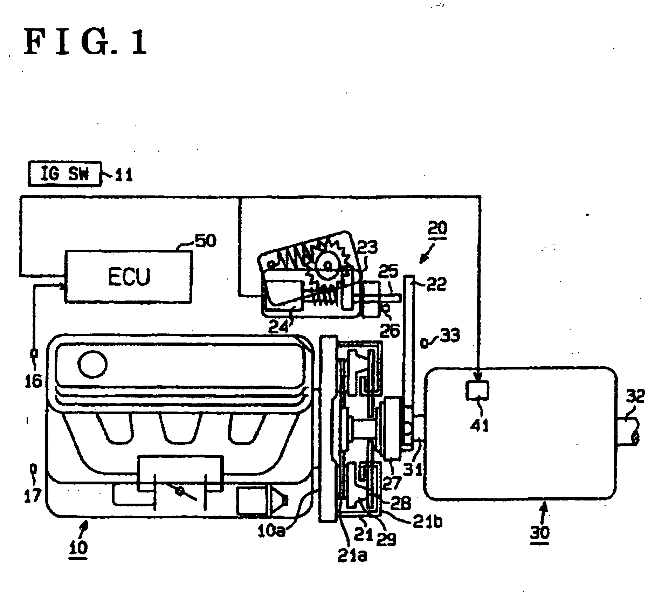

As illustrated in FIG. 1, a vehicle control system includes main elements such as an engine (a driving power source) 10, an automatic clutch assembly 20 and an automated manual transmission 30. The automatic clutch assembly 20, which is a diaphragm spring type, is assembled at a flywheel 10a rotatable integrally with an output shaft of the engine 10, i.e., a crankshaft. The automated manual transmission 30 is operatively linked to the engine 10 via the automatic clutch assembly 20.

The engine 10 is provided with an ignition switch 11 for an engine ignition and an engine rotational speed sensor 16 for detecting a rotational speed of the crankshaft Ne.

The automatic clutch assembly 20 is configured with a mechanical (dry type - single) friction clutch 21, a release fork 22, and a clutch actuator 23 configured to control, by use of the release fork 22, transmission of a rotation of the friction clutch 21, i.e., to control, by use of the release fork 22, clutch torque transmitted via the friction clutch 21.

The friction clutch 21 is provided with a clutch disc 21a which is disposed facing the flywheel 10a and is rotatable integrally with an input shaft 31 of the automated manual transmission 30. When the pressure load on the clutch disc 21a relative to the flywheel 10a varies, clutch torque transmitted between the flywheel 10a and the clutch disc 21a, the transmission of a rotation of the friction clutch 21, varies in response to the change of the pressure load. Hereinafter, a torque capable of being transmitted from the flywheel 10a to the clutch disc 21a represents a clutch torque. By appropriately controlling the clutch torque in response to an intention of a driver to shift, or in response to a vehicle condition, a smooth vehicle start performance or accurate acceleration can be achieved.

The clutch actuator 23 is provided with a direct current electric motor 24 as a driving power source. The release fork 22 varies its posture in response to forward or rearward movement of a rod 25 operated by the motor 24. A diaphragm spring 28 is made of a resilient metal and can be contacted by a release bearing 27 operated by the clutch lever 22. A pressure plate 29 in the friction clutch 21 is applied with pressure load from the distorted diaphragm spring 28 which is supported by clutch cover 21b at a fulcrum. The pressure plate 29 is mounted on a clutch cover 21b of the friction clutch 21 which is integrally rotatable with the flywheel 10a. When the clutch lever 22 varies its posture in response to the stroke of the rod 25 operated by the clutch actuator 23, the pressure load on the clutch disc 21a relative to the flywheel 10a is changed via the pressure plate 29, and the transmitted clutch torque is thereby controlled.

More particularly, when the rod 25 is moved forward - i.e., in the right direction as viewed in FIG. 1, the clutch lever 22 is operated in the clockwise direction. In this case, the pressure load on the clutch disc 21a relative to the flywheel 10a is reduced. When the rod 25 is then moved further forward, the pressure load on the clutch disc 21a relative to the flywheel 10a ultimately results in substantially zero. At this point, the flywheel 10a has been frictionally disconnected from the clutch disc 21a, whereupon the transmission of rotation is interrupted. This state, in which the transmission of rotation is not established, is referred to as a clutch disengaged condition. Further, a position of the rod 25 at this point is referred to as a standby position. Still further, a movement amount corresponding to the position of the rod 25 represents a clutch stroke as a control amount by the clutch actuator 23.

When the rod 25 is retracted in a left direction as viewed in FIG. 1 from its standby position, the pressure load on the clutch disc 21a relative to the flywheel 10a is increased in response to any increase in the moving amount - i.e., in response to any increase in the clutch stroke. At this point, some rotational speed is transmitted between the flywheel 10a and the clutch disc 21a although there is still a difference between the rotational speed of the flywheel 10a and the rotational speed of the clutch disc 21a. The difference between those rotational speeds corresponds to the pressure load and is hereinafter referred to as a slip amount. The slip amount will ultimately become zero in response to an increase of the pressure load along with the retraction of the rod 25, at which stage the flywheel 10a and the clutch disc 21a are synchronized for rotation. The synchronized rotation of the flywheel 10a and the clutch disc 21a is referred to as a clutch fully engaged condition. The position of the rod 25 at this point is referred to as a fully engaged position.

Therefore, the slip amount between the flywheel 10a and the clutch disc 21a can be controlled by controlling the stroke of the rod 25 by the clutch actuator 23 between the standby position and the clutch fully engaged position. When the stroke of the rod 25 is part way between the standby position and the fully engaged position, the condition of the flywheel 10a and the clutch disc 21a is referred to as a clutch half-engaged condition. Each of the clutch fully engaged condition and the clutch half-engaged condition represents a clutch engaged condition.

The automatic clutch assembly 20 is provided with a stroke sensor 26 for detecting a clutch stroke St which represents a moving position of the rod 25 operated by the clutch actuator 23. The clutch stroke St is relied on for determining a condition for the rotation transmitted via the friction clutch 21. The stroke sensor 26 may be mounted on the rod 25 or may be mounted elsewhere in the vehicle as illustrated in FIG. 1.

The automated manual transmission 30 according to the embodiment of the present invention is a parallel axis type gear transmission which performs, for example, five forward shift stages and a single reverse shift stage. The automated manual transmission 30 includes the input shaft 31, an output shaft 32, and plural gear trains for speed change. The input shaft 31 of the transmission 30 is linked to the clutch disc 21a of the friction clutch 21 such that the driving force from the engine 10 can be transmitted to the transmission 30 via the input shaft 31. The output shaft 32 of the transmission 30 is operatively linked to an axle (not shown). A rotational speed sensor 33 illustrated in FIG. 1 is provided for detecting the rotational speed of the input shaft 31 - i.e., an input shaft rotational speed Ni. The rotational speed sensor 33 may be mounted on the input shaft 31 or may be mounted elsewhere in the vehicle. A shift actuator 41 illustrated in FIG. 1 is provided for selecting gear trains for transmitting the driving-power from the engine 10. The shift actuator 41 may be disposed in the transmission 30 or elsewhere in the vehicle. The automated manual transmission 30 can hence perform a desired shift stage therein in response to activation of the shift actuator 41.

The vehicle control system illustrated in FIG. 1 is provided with an electronic control unit (abbreviated to ECU) 50 which functions as, for example, estimating means calculating means and correcting means. The ECU 50 includes main elements such as a well-known central processing unit (abbreviated to CPU) with a microcomputer, a read-only-memory (abbreviated to ROM) for storing various programs and maps, a random-access-memory (abbreviated to RAM) for reading out and writing down various data, and an electronically erasable and programmable read only memory (abbreviated to EEPROM) for storing data without a back-up power source. The ECU 50 is connected with ignition switch 11, various sensors, which include the engine rotational speed sensor 16, the stroke sensor 26 and the rotational speed sensor 33, the clutch actuator 23, and the shift actuator 41. The ECU 50 receives as inputs the on signal from the ignition switch 11 and signals detected by various sensors so as to detect the vehicle driving condition including the on/off condition of the ignition switch 11, the engine rotational speed Ne, the clutch stroke St, the input shaft rotational speed Ni, and the like. The ECU 50 further activates the clutch actuator 23 and the shift actuator 41 on the basis of the vehicle driving conditions and in response to an intention of a driver of a vehicle. Moreover, the ECU 50 controls the driving of a throttle actuator, an ISC valve, and so on.

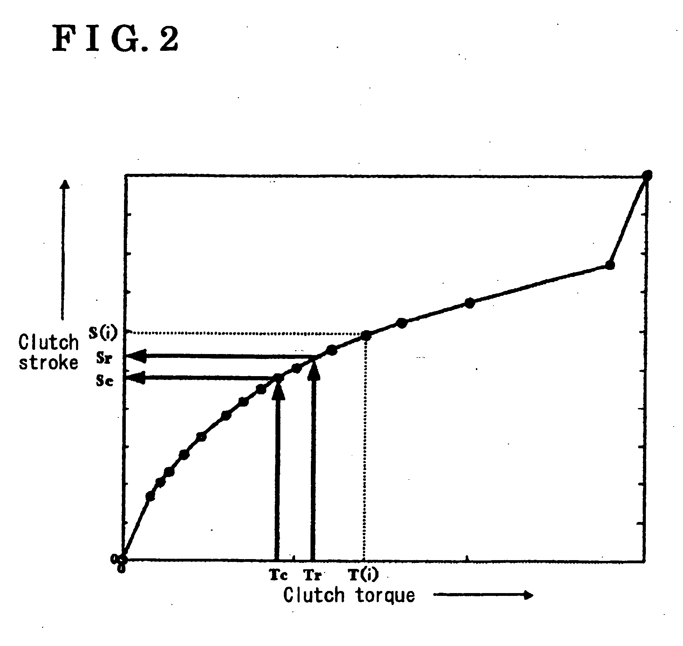

More particularly, on the basis of a clutch torque map (illustrated in Fig. 2) that has been stored in the EEPROM; the ECU 50 drives the clutch actuator 23 and adjusts a rotation transmitted via the clutch 21. In this manner, the rotation transmitting via the clutch 21 can be controlled automatically in response to an intention of a vehicle driver or in response to a vehicle driving condition. In other words, the ECU 50 according to the embodiment of the present invention serves as a clutch control apparatus and stores a program configuring a correction coefficient-calculating unit and a clutch torque map-correcting unit, in the ROM thereof.

More over, the ECU 50 activates the shift actuator 41 and switcheably selects a shift stage capable of transmitting a driving power in the automated manual transmission 30. Therefore, a shift stage, which corresponds to an intention of a driver or a vehicle driving condition, is hence established in the automated manual transmission 30.

Next, the following explanation will be given for explaining overviews of a relationship between a clutch torque and a clutch stroke that is associated with a clutch control, and of a correcting method of a learned relationship therebetween.

With reference to a clutch torque map explaining a relationship between a clutch torque and a clutch stroke in Fig. 2, a clutch stroke at a zero point of a clutch torque represents the aforementioned standby position. A clutch stroke at a positive side, i.e., at an upper side, of the standby position corresponds to a movement amount of the rod 25 moving in a direction of the fully engagement point. As is evident from the clutch torque map in Fig. 2, the degree of the clutch torque increases in response to any movement of the rod 25 in the direction of the fully engagement position, i.e., in response to increase of the clutch stroke.

The clutch torque map illustrated in Fig.2 includes plural map points plotted on the map, which are produced with plural predetermined clutch torques $T(i)$ and clutch strokes $S(i)$ calculated corresponding to the respective plural predetermined clutch torques $T(i)$. The clutch torque map is then established with these plural map points linearly interpolated (i.e., linear interpolation). The parameter "i" herein is expressed by an integral number. On the clutch torque map illustrated in Fig. 2, a degree of the clutch torque $T(i)$ is designed to increase proportionately with any increase of a degree of the parameter "i". According to the embodiment of the present invention, the following explanation of updating and correcting the clutch torque map is based on a multitude of points to be learned, each of the points which is produced with one predetermined clutch torque $T(i)$ and one clutch stroke $S(i)$ corresponding to the one predetermined clutch torque $T(i)$. Alternatively, the updating and correcting the clutch torque map can be implemented on the basis of a singular point to be learned, a singular point which is produced with one predetermined clutch torque $T(i)$ and one clutch stroke $S(i)$ corresponding to the one predetermined clutch torque $T(i)$. Moreover, the clutch torque map can be corrected by modifying a degree of reflection of each point to be learned.

Operation for updating or correcting a clutch torque map is explained below.

In the first instance, the ECU 50 determines whether or not vehicle has started. When the ECU 50 determines that the vehicle has started, in a condition that the clutch has been half-engaged, i.e., the clutch has not been synchronized yet, an estimated clutch torque Tc, which represents an actually output clutch torque while the vehicle has started, is calculated by the following conventional Formula (1);

$$Tc = Te - J \cdot dNe/dt \quad \cdots \cdots \cdots \cdots \cdots \cdots \cdots \cdots (1).$$

In Formula (1), the variable "Te" represents an engine torque, the variable "J" represents an engine inertia which is a design value characteristic to an engine, and the variable "Ne" represents an engine rotational speed. The estimated clutch torque Tc is calculated at least once a learning condition has been satisfied. The learning condition is satisfied when an acceleration of an engine rotation *dNe/dt* remains within a predetermined acceleration range indicating that the acceleration of an engine rotation *dNe/dt* is at a stable state. According to the embodiment of the present invention, for the purpose of stabilizing learning points (i.e., learning values), an underlying concept is that a successful learning can be achieved only in circumstances where the above-described learning condition has continued for a predetermined period of time.

In the next place, in accordance with the clutch torque map illustrated in Fig. 2, the ECU 50 transforms into an estimated clutch stroke Sc, the estimated clutch torque Tc, which is obtained within a last predetermined time zone incorporated in a range in which the learning condition is satisfied. Likewise, the ECU 50 transforms to a target clutch stroke Sr, a target clutch torque Tr that has been set within the last predetermined time zone. The ECU 50 then calculates a clutch torque correction ratio (corresponding to a correction coefficient) Kh by assigning values to the estimated clutch stroke Sc and the target clutch stroke Sr in Formula (2);

$$Kh = \left(\frac{Sc}{Sr}\right) \quad \cdots\cdots\cdots\cdots\cdots\cdots\cdots\cdots\cdots\cdots \quad (2).$$

The ECU 50 then calculates a mean value of the clutch torque correction ratios Kh within the last predetermined time zone within a range in which the learning condition is satisfied. This calculated mean value is referred to as a clutch torque correction ratio Kh_s for a vehicle start.

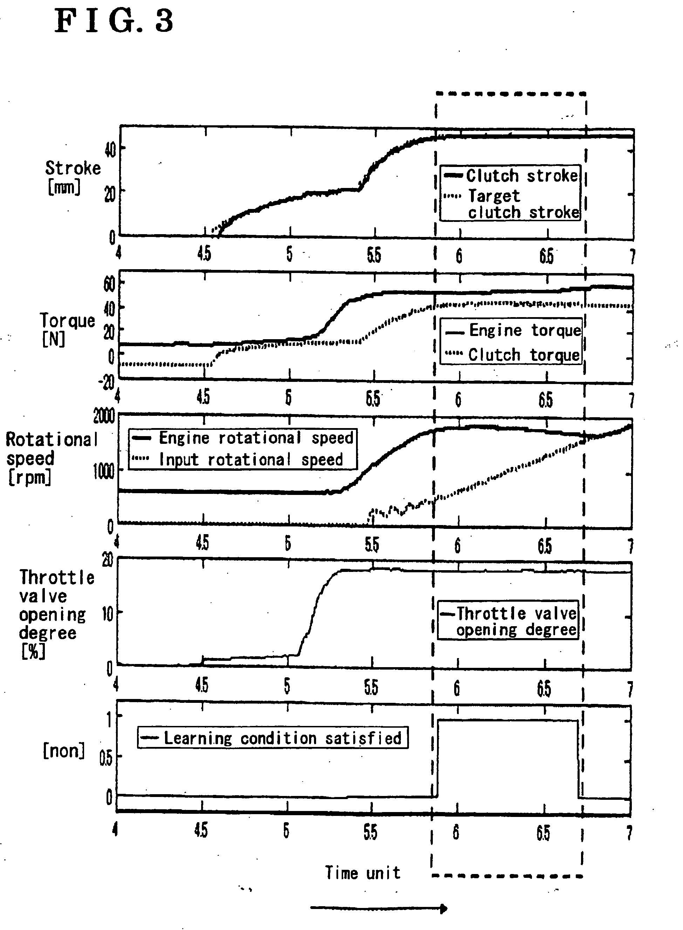

Fig. 3 is a time chart for explaining changes in a vehicle condition at a time that a vehicle starts. A rising zone within an inset chart for the learning condition, illustrated at the lowermost level of the time chart of Fig. 3 and enclosed by a broken line, represents a zone in which the learning condition has been satisfied.

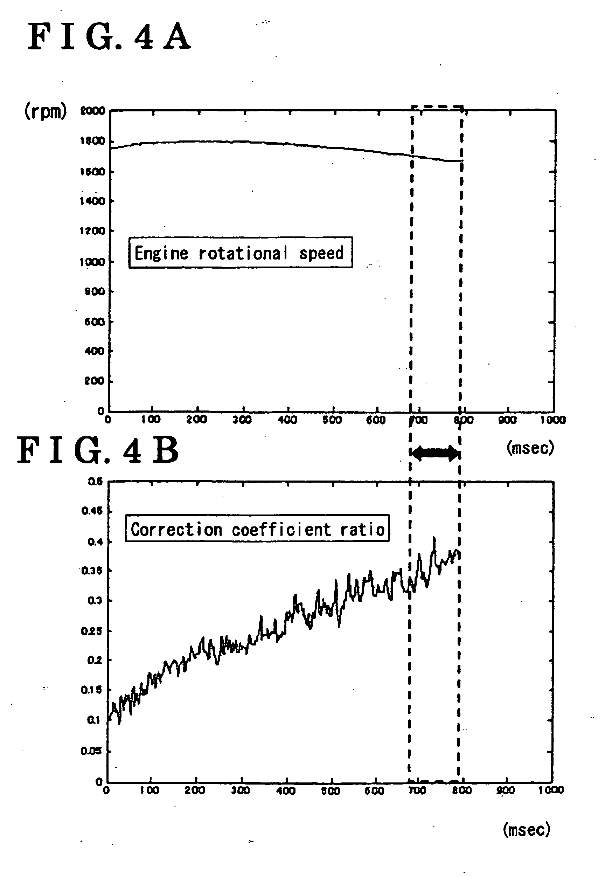

Fig. 4A is a time chart for explaining variations in an engine rotational speed within a range in which the learning condition is satisfied, while Fig. 4B is a time chart for explaining variations in a correction ratio Kh calculated by Formula (2) within the range in which the learning condition is satisfied. Each of a range enclosed by a broken line in Figs. 4A and 4B and an interval defined by a bi-directional arrow represents a last predetermined time zone within the range in which the learning condition is satisfied. As a condition to satisfy the learning condition, there are conditions, for example, that the acceleration of an engine rotational speed (dNe/dt) exhibits monotone decreasing, and that the acceleration of an engine rotational speed (dNe/dt) within a range between zero and 5rpm/msec. According to the embodiment of the present invention, as is obvious from Figs. 4A and 4B, a time zone between a last point, at which the range in which the learning condition is satisfied is terminated, and a point which dates back in time by an interval of 100msec from the last point is referred to as the last predetermined time zone. Fig. 4A demonstrates that an average value of engine rotational speeds within the last predetermined time zone, an average value expressed by Ne_start, is 1713rpm, and the average value of clutch torque correction ratios Kh within the last predetermined time zone, the average value expressed by Kh_s, is 0.36. Here, the ECU 50 stores the average value of engine rotational speeds Ne_start in the memorizing means thereof.

As is obvious from Formula (2), the average value of clutch torque correction ratios Kh within the last predetermined time zone, the average value expressed by Kh_s, substantially corresponds to a degree of deviation between set values of clutch torques at the learning points, i.e., the target clutch torques Tr, and actual values of clutch torques at the learning points, i.e., the estimated clutch torques Tc. Therefore, the deviation can be absorbed by multiplying the target clutch torque values at the learning points of the clutch torque map by the average value of the clutch torque correction ratios, expressed by Kh_s.

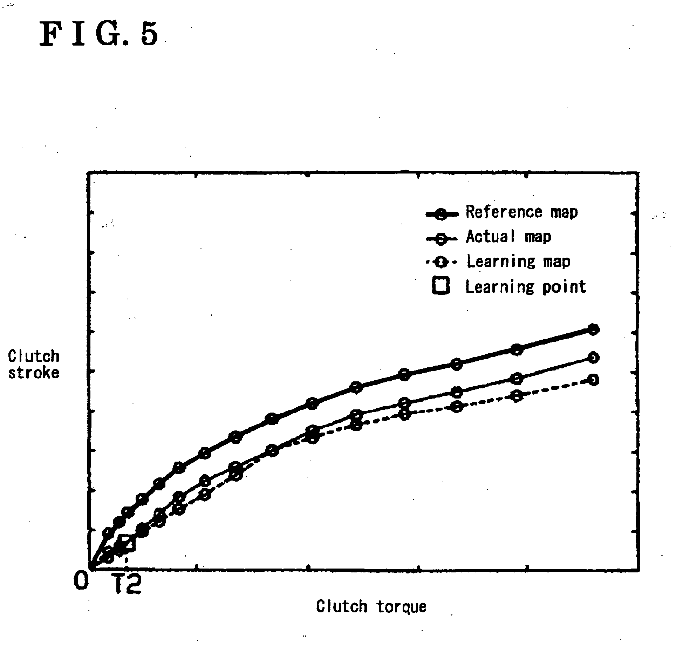

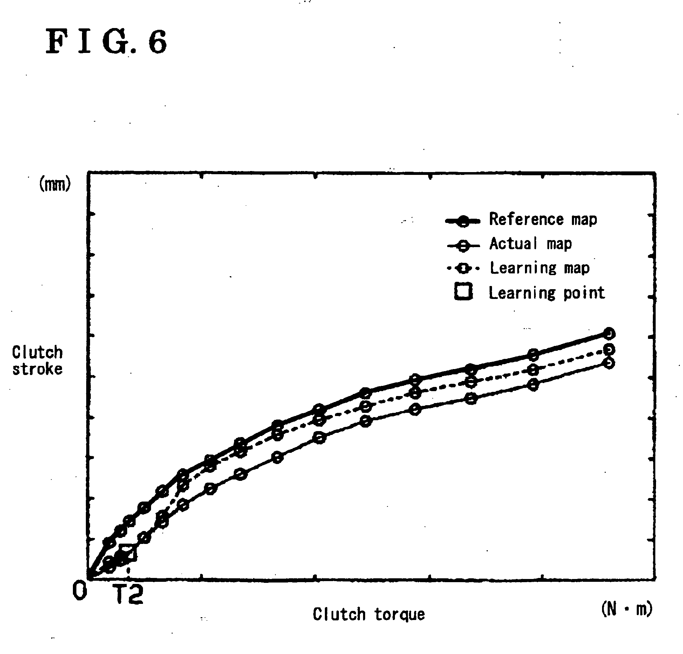

In the further next place, correction of the clutch torque map is implemented, in terms of a multitude of points including at least the learning points, on the basis of the correction ratio Kh_s obtained as described above. Fig. 5 illustrates a repeatedly corrected clutch torque map, which has been produced by calculating a reference ratio irrespective of whether or not the learning point is large. This clutch torque map is established not only with regard to the learning points but also with regard to other learning points. On the other hand, Fig. 6 illustrates a repeatedly corrected clutch torque map, which has been produced by calculating reference ratios in consideration of whether or not the learning point is large. This clutch torque map is established not only with regard to the learning points but also with regard to other leaning points. That is, Fig. 6 illustrates a repeatedly corrected clutch torque map in such a manner that any excessive learning can be restrained within a high clutch torque range on the clutch torque map illustrated in Fig. 6.

Figs. 5 and 6 respectively demonstrate that a value denoted by a reference map line on a clutch torque map at an initial condition approaches, within a low clutch torque range, a value denoted by an actual map line on an actual clutch torque map. Therefore, it is obvious that any preferable learning can be implemented within the low clutch torque range.

However, within a high clutch torque range in Fig. 5, the leaning points denoted by a learning map line are inferior to the values denoted by the actual map line. As a result, there may be a danger of the target clutch stroke becoming excessively small, i.e., a danger of excessive learning. In such circumstances, there may be a danger of the clutch slipping. Likewise, within a high clutch torque range in Fig. 6, the learning results are not reflected effectively. In such circumstances, the learning clutch torque map does not converge on the actual clutch torque map, and there may be a danger of the degree of the clutch stroke becoming excessive.

According to the embodiment of the present invention, in an eventuality when the ECU 50 determines that a shift operation has been implemented while the learning condition has been satisfied, the clutch torque correction ratio Kh is corrected as follows.

In the first instance, when the clutch has been half-engaged upon a shift operation, likewise as when a vehicle start, the estimated clutch torque Tc, which is an actually output clutch torque, is calculated by the above-described Formula (1). Further, the ECU 50 transforms, likewise as when a vehicle start, the estimated clutch torque Tc to the estimated clutch stroke Sc, while the ECU 50 transforms the target clutch torque Tr to the target clutch stroke Sr. The ECU 50 then calculates a clutch torque correction ratio Kh by assigning values to the estimated clutch stroke Sc and the target clutch stroke Sr in the above-described Formula (2).

In the next place, the ECU 50 corrects the correction ratio Kh to be increased in response to a level of the engine rotational speed detected by the engine rotational speed sensor 16 illustrated in Fig. 1, and obtains a correction ratio Kh' by Formula 3():

$$Kh' = Kh \times a \cdot Ne \quad \cdots \cdots \cdots \cdots \cdots \cdots (3).$$

The coefficient "a" represents a correction coefficient upon a shift operation. The variable "Ne" represents an engine rotational speed.

In practical, according to the embodiment of the present invention, the ECU 50 employs Formula (4) to obtain the correction ratio Kh':

$$Kh' = Kh \times \frac{Ne\_change}{Ne\_start} \quad \cdots \cdots \cdots \cdots \cdots (4).$$

In the above-described Formula (4), the variable *Ne_change* represents an average value of an engine rotational speed within the last predetermined time zone within a range in which the learning condition is satisfied, and the variable *Ne_start* represents the average value of engine rotational speeds, which has been memorized beforehand.

Each of the correction ratio Kh and the correction ratio Kh' is multiplied to the predetermined target clutch torque Tc or a target clutch torque learnt at a previous cycle and stored at the memory. Namely, each of the correction ratio Kh and the correction ratio Kh' can be employed for the purpose of absorbing a difference between a set value and an actual value.

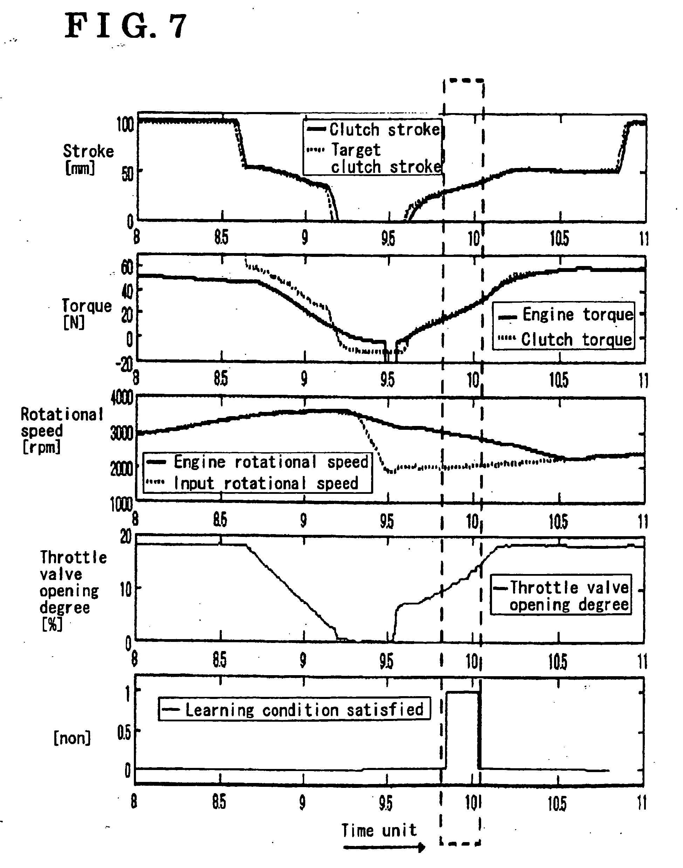

Fig. 7 is a time chart for explaining changes in a vehicle condition at a time that a shift operation is performed. A rising zone within an inset chart for the learning condition, illustrated at the lower most level of the time chart of Fig. 3 and enclosed by a broken line, represents a zone in which the learning condition has been satisfied.

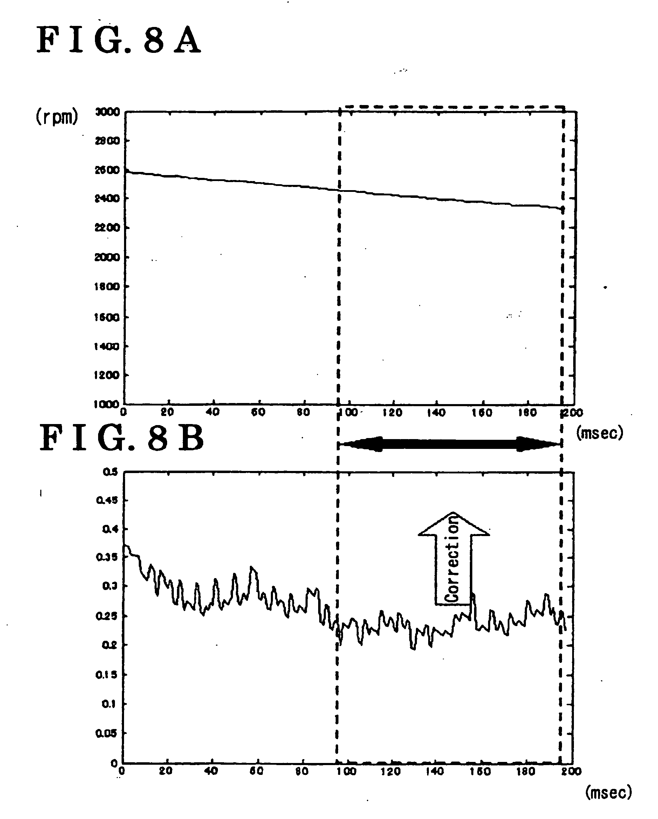

Fig. 8A is a time chart for explaining variations in an engine rotational speed within a range in which the learning condition is satisfied, while Fig. 8B is a time chart for explaining variations in a correction ratio Kh calculated without being applied with correction by Formula (4), within the range in which the learning condition is satisfied.

Each of a range enclosed by a broken line in Figs. 8A and 8B and an interval defined by a bi-directional arrow represents a last predetermined time zone within the range in which the learning condition is satisfied. According to the embodiment of the present invention, as is obvious from Figs. 8A and 8B, a time zone between a last point, at which the range in which the learning condition is satisfied is terminated, and a point which dates back in time by an interval of 100 msec from the last point is referred to as the last predetermined time zone. Fig. 8A demonstrates that an average value of engine rotational speeds within the last predetermined time zone, an average value expressed by *Ne_change,* is 2415rpm, and the average value of the clutch torque correction ratios Kh within the last predetermined time zone, an average value expressed by Kh_c, is 0.24.

When a vehicle starts, the clutch torque correction ratio Kh obtained as described above is employed as it is, without modification. However, if this clutch torque correction ratio Kh is likewise applied to an event of a shift operation, the average value of the clutch torque correction ratios Kh_c is tended to become excessively small. This may constitute a problem in practical terms.

In light of the foregoing, according to the embodiment of the present invention, the ECU 50 corrects the clutch torque correction ratio Kh by means of Formula (4) and obtains a clutch torque correction ratio Kh'. For example, when actual values in Figs. 4A, 4B, 8A and 8B are assigned to the respective sections in Formula (4):

$$Kh\_c' = 0.24 \times \frac{2415}{1713} = 0.33.$$

Therefore, the clutch torque correction ratio Kh' at a shift operation approaches the clutch torque correction ratio Kh at a vehicle start. This fact exhibits that the learning results can be highly reliable.

As described above, according to the embodiment of the present invention, it is possible to control a clutch torque preferably by implementing the above feedback-type learning method with the correction coefficient for correcting the target clutch torque. Moreover, it is possible to improve frequency of learning during a clutch engaged condition. Moreover, according to the embodiment of the present invention, it is possible to implement learning process also within a high clutch torque range, thereby obtaining preferable learning results.

As described above, according to the embodiment of the present invention, the ECU 50 determines whether a vehicle has started or a shift operation has been performed. When the ECU 50 judges that a shift operation has been performed, the clutch torque correction ratio Kh is corrected. Alternatively, in a view that the engine rotational speed at a time a vehicle starts remains within a fixed speed range, the clutch torque correction ratio Kh can be corrected by use of Formula (4) even when a vehicle starts.

Although the above explanation is based on the embodiment of the present invention, the present invention should not be limited to the embodiment. As far as learning of clutch torque is implemented on the basis of a relationship between learning results at a shift operation and an engine rotational speed, the present invention is not limited specifically.

It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A clutch control apparatus controlling a clutch torque to a target clutch torque (Tr) by control of a driving of an actuator (23) at a target control amount corresponding to the target clutch torque (Tr) comprising:

   a correction coefficient calculating unit (50) configured to calculate, when a predetermined learning condition has been satisfied, a correction coefficient (Kh) for correcting the target clutch torque (Tr) on the basis of a difference between the target clutch torque (Tr) and an estimated clutch torque (Tc), the estimated clutch torque output in an event that the driving of the actuator (23) is controlled at the target control amount corresponding to the target clutch torque (Tr); and
   a target clutch torque correcting unit (50) configured to correct the target clutch torque (Tr) on the basis of the correction coefficient (Kh),

   wherein the correction coefficient calculating unit (50) corrects the correction coefficient (Kh) on the basis of an engine rotational speed once the predetermined learning condition has been satisfied during a clutch engaged condition and
   wherein the target control amount of the actuator (23) is obtained by use of a clutch torque map defined on the basis of a relationship between a clutch torque and a control amount corresponding to a driving of the actuator (23), and
   wherein the target clutch torque correcting unit is a clutch torque map correcting unit (50) configured to correct, on the basis of the correction coefficient (Kh), the clutch torque map relevant to at least one clutch torque point once the predetermined learning condition has been satisfied,
   **characterized in that**
   once the predetermined learning condition has been satisfied during a clutch engaged condition when a shift stage in a transmission (30) is shifted to another shift stage in the transmission (30), the correction coefficient calculating unit (50) corrects the correction coefficient (Kh) by use of a ratio between an engine rotational speed (Ne_start), the engine rotational speed (Ne_start) obtained at a time that the correction coefficient (Kh) was calculated once a vehicle starts during a clutch engaged condition, and an engine rotational speed (Ne_change), the engine rotational speed (Ne_change) obtained once the predetermined learning condition has been satisfied during the clutch engaged condition when a shift stage in a transmission (30) is shifted to another shift stage in the transmission (30),
   wherein the correction coefficient calculating unit (50) corrects by multiplying the correction coefficient (Kh) calculated once a vehicle starts by a predetermined constant value (a) and an engine rotational speed (Ne).

2. A clutch control apparatus according to any preceding claim, wherein the predetermined learning condition is satisfied when an acceleration of an engine rotation (dNe/dt) is substantially constant for a predetermined time.

3. A clutch control apparatus according to one of claims 1 or 2, wherein the actuator (23) controls the clutch torque by moving a rod (25) and by using a diaphragm spring (28) for varying a pressure load for pushing a clutch disc (21a) to a flywheel (10a) via a pressure plate (29).

4. A clutch control apparatus according to any one of the preceding claims, wherein the correction coefficient calculating unit (50) corrects the correction coefficient (Kh) by multiplying the correction coefficient (Kh) by a value calculated by dividing the engine rotational speed (Ne), the engine rotational speeds (Ne) obtained once the predetermined learning condition has been satisfied during the clutch engaged condition when the shift stage in the transmission (30) is shifted to the another shift stage in the transmission (30), by an engine rotational speed (Ne), the engine rotational speed (Ne) which was obtained once the predetermined learning condition has been satisfied while a vehicle starts and has been stored.

5. A clutch control apparatus according to any one of claims 1 to 3, wherein the correction coefficient calculating unit (50) corrects the correction coefficient (Kh) by multiplying the correction coefficient (Kh) by a value calculated by dividing an average value of engine rotational speeds (Ne_change), the average value of engine rotational speeds (Ne_change) obtained once the predetermined learning condition has been satisfied during the clutch engaged condition when the shift stage in the transmission (30) is shifted to the another shift stage in the transmission (30), by an average value of engine rotational speeds (Ne_start), the average value of engine rotational speeds (Ne_start) which was obtained once the predetermined learning condition has been satisfied while a vehicle starts and has been stored.

**Patentansprüche**

1. Kupplungssteuerungsvorrichtung, die ein Kupplungsdrehmoment auf ein Zielkupplungsdrehmoment (Tr) durch Steuern eines Antriebes eines Stellgliedes (23) auf eine Zielsteuermenge entsprechend dem Zielkupplungsdrehmoment (Tr) steuert, enthaltend:

   eine Korrekturkoeffizientenberechnungseinheit (50), die gestaltet ist, einen Korrekturkoeffizienten (Kh) zum Korrigieren des Zielkupplungsdrehmomentes (Tr) auf der Basis einer Differenz zwischen dem Zielkupplungsdrehmoment (Tr) und einem abgeschätzten Kupplungsdrehmoment (Tc) zu berechnen, wenn eine vorbestimmte Lernbedingung erfüllt ist, wobei das abgeschätzte Kupplungsdrehmoment in einem Fall ausgegeben wird, in dem der Antrieb des Stellgliedes (23) auf der Zielsteuermenge entsprechend dem Zielkupplungsdrehmoment (Tr) kontrolliert wird;
   eine Zielkupplungsdrehmomentenkorrektureinheit (50), die gestaltet ist, das Zielkupplungsdrehmoment (Tr) auf der Basis des Korrekturkoeffizienten (Kh) zu korrigieren,

   wobei die Korrekturkoeffizientenberechnungseinheit (50) den Korrekturkoeffizienten (Kh) auf der Basis einer Motorrotationsgeschwindigkeit korrigiert, sobald die vorbestimmte Lernbedingung während eines Kupplungseingriffszustandes erfüllt ist, und
   wobei die Zielsteuermenge des Stellgliedes (23) unter Verwendung einer Kupplungsdrehmomentenkarte, die auf der Basis eines Verhältnisses zwischen einem Kupplungsdrehmoment und einer Steuermenge, die einem Antrieb des Stellgliedes (23) entspricht, definiert ist, erhalten wird, und wobei die Zielkupplungsdrehmomentenkorrektureinheit eine Kupplungsdrehmomentenkartenkorrektureinheit (50) ist, die gestaltet ist, auf der Basis des Korrekturkoeffizienten (Kh) die Kupplungsdrehmomentenkarte maßgeblich für zumindest einen Kupplungsdrehmomentenpunkt zu korrigieren, sobald die vorbestimmte Lernbedingung erfüllt ist,
   **dadurch gekennzeichnet, dass**
   sobald die vorbestimmte Lernbedingung während eines Kupplungseingriffszustandes erfüllt ist, wenn eine Schaltstufe in einem Getriebe (30) auf eine andere Schaltstufe in dem Getriebe (30) geschaltet wird, die Korrekturkoeffizientenberechnungseinheit (50) den Korrekturkoeffizienten (Kh) unter Verwendung eines Verhältnisses zwischen einer Motorrotationsgeschwindigkeit (Ne_start), wobei die Motorrotationsgeschwindigkeit (Ne_start) zum Zeitpunkt erhalten wurde, zu dem der Korrekturkoeffizient (Kh) während eines Kupplungseingriffszustandes einmal berechnet wurde, als das Fahrzeug startete, und einer Motorrotationsgeschwindigkeit (Ne_change) korrigiert, wobei die Motorrotationsgeschwindigkeit (Ne_change) erhalten wird, sobald die vorbestimmte Lernbedingung während des Kupplungseingriffszustandes erfüllt ist, wenn eine Schaltstufe in einem Getriebe (30) auf eine andere Schaltstufe in dem Getriebe (30) geschaltet wird;
   wobei die Korrekturkoeffizientenberechnungseinheit (50) durch Multiplizieren des Korrekturkoeffizienten (Kh), der berechnet wird, sobald ein Fahrzeug startet, mit einem vorbestimmten konstanten Wert (a) und einer Motorrotationsgeschwindigkeit (Ne) korrigiert.

2. Kupplungssteuerungsvorrichtung nach einem vorhergehenden Anspruch, wobei die vorbestimmte Lernbedingung erfüllt ist, wenn eine Beschleunigung einer Motorrotation (dNe/dt) im Wesentlichen konstant während einer vorbestimmten Zeit ist.

3. Kupplungssteuerungsvorrichtung nach einem der Ansprüche 1 oder 2, wobei das Stellglied (23) das Kupplungsdrehmoment durch Bewegen einer Stange (25) und unter Verwendung einer Membranfeder (28) zum Variieren einer Drucklast zum Drücken einer Kupplungsscheibe (21a) auf ein Schwungrad (10a) über eine Druckplatte (29) steuert.

4. Kupplungssteuerungsvorrichtung nach einem der vorhergehenden Ansprüche, wobei die Korrekturkoeffizientenberechnungseinheit (50) den Korrekturkoeffizienten (Kh) durch Multiplizieren des Korrekturkoeffizienten (Kh) mit einem Wert, der durch Teilen der Motorrotationsgeschwindigkeit (Ne) berechnet wird, die erhalten wird, sobald die vorbestimmte Lernbedingung während des Kupplungseingriffszustandes, wenn die Schaltstufe in dem Getriebe (30) auf die andere Schaltstufe in dem Getriebe (30) geschaltet wird, erfüllt ist, durch eine Motorrotationsgeschwindigkeit (Ne), wobei die Motorrotationsgeschwindigkeit (Ne) erhalten wurde, als die vorbestimmte Lernbedingung erfüllt war, während ein Fahrzeug startete und gespeichert wurde.

5. Kupplungssteuerungsvorrichtung nach einem der Ansprüche 1 bis 3, wobei die Korrekturkoeffizientenberechnungseinheit (50) den Korrekturkoeffizienten (Kh) korrigiert durch Multiplizieren des Korrekturkoeffizienten (Kh) mit einem Wert, der durch Teilen eines Durchschnittswertes von Motorrotationsgeschwindigkeiten (Ne_change), wobei der Durchschnittswert der Motorrotationsgeschwindigkeiten (Ne_change) erhalten wird, sobald die vorbestimmte Lernbedingung, während des Kupplungseingriffszustandes, wenn die Schaltstufe in dem Getriebe (30) auf die andere Schaltstufe in dem Getriebe (30) geschaltet wird, erfüllt ist, durch einen Durchschnittswert von Motorrotationsgeschwindigkeiten (Ne_start) berechnet wird, wobei der Durchschnittswert von Motorrotationsgeschwindigkeiten (Ne_start) erhalten wurde, sobald die vorbestimmte Lernbedingung erfüllt war, während ein Fahrzeug startete, und gespeichert wurde.

## Revendications

1. Dispositif de commande d'embrayage qui commande un couple d'embrayage par rapport à un couple d'embrayage cible (Tr) par la commande d'une excitation d'un actuateur (23) à une grandeur de commande cible correspondant au couple d'embrayage cible (Tr), le dispositif comprenant :

une unité de calcul de coefficient de correction (50) qui est configurée pour calculer, quand une condition d'apprentissage prédéterminée a été satisfaite, un coefficient de correction (Kh) pour corriger le couple d'embrayage cible (Tr) sur la base d'une différence entre le couple d'embrayage cible (Tr) et un couple d'embrayage estimé (Tc), le couple d'embrayage estimé étant délivré au cours d'un événement dans lequel l'excitation de l'actuateur (23) est commandée à la grandeur de commande cible correspondant au couple d'embrayage cible (Tr) ; et
une unité de correction de couple d'embrayage cible (50) qui est configurée pour corriger le couple d'embrayage cible (Tr) sur la base du coefficient de correction (Kh),

dans lequel l'unité de correction de couple d'embrayage cible (50) corrige le coefficient de correction (Kh) sur la base d'une vitesse de rotation du moteur une fois que la condition d'apprentissage prédéterminée a été satisfaite durant une condition engagée de l'embrayage et
dans lequel la grandeur de commande cible de l'actuateur (23) est obtenue par l'utilisation d'une carte de couple d'embrayage définie sur la base d'une relation entre un couple d'embrayage et une grandeur de commande correspondant à une excitation de l'actuateur (23) ; et
dans lequel l'unité de correction de couple d'embrayage cible est une unité de correction de carte de couple d'embrayage (50) qui est configurée pour corriger, sur la base du coefficient de correction (Kh), la carte de couple d'embrayage pertinente par rapport à au moins un point de couple d'embrayage une fois que la condition d'apprentissage prédéterminée a été satisfaite,
**caractérisé en ce que**, une fois que la condition d'apprentissage prédéterminée a été satisfaite durant une condition engagée de l'embrayage quand un stade de changement de vitesses dans une transmission (30) est changé à un autre stade de changement de vitesse dans la transmission (30), l'unité de calcul de coefficient de correction (50) corrige le coefficient de correction (Kh) en utilisant un rapport entre une vitesse de rotation du moteur (Ne_start) - la vitesse de rotation du moteur (Ne_start) qui a été obtenue à un moment où le coefficient de correction (Kh) a été calculé une fois que le véhicule a démarré au cours d'une condition engagée de l'embrayage, et une vitesse de rotation du moteur (Ne_change) - la vitesse de rotation du moteur (Ne_change) qui a été obtenue une fois que la condition d'apprentissage prédéterminée a été satisfaite durant une condition engagée de l'embrayage quand un stade de changement de vitesses dans une transmission (30) est changé à un autre stade de changement de vitesse dans la transmission (30),
dans lequel l'unité de calcul de coefficient de correction (50) corrige en multipliant le coefficient de correction (Kh) calculé une fois que le véhicule a démarré par une valeur constante (a) prédéterminée et une valeur de rotation du moteur (Ne).

2. Dispositif de commande d'embrayage selon la revendication 1, dans lequel la condition d'apprentissage prédéterminée est satisfaite quand une accélération de la rotation du moteur est sensiblement constante pendant une période de temps prédéterminée.

3. Dispositif de commande d'embrayage selon l'une des revendications 1 ou 2, dans lequel l'actuateur (23) commande le couple d'embrayage en déplaçant une tige (25) et en utilisant un ressort à membrane (28) pour faire varier une charge de pression pour pousser un disque d'embrayage (21a) vers un volant moteur (10a) par le biais d'un plateau de pression (29).

4. Dispositif de commande d'embrayage selon l'une quelconque des revendications précédentes, dans lequel l'unité de calcul de coefficient de correction (50) corrige le coefficient de correction (Kh) en multipliant le coefficient de correction (Kh) par une valeur calculée en divisant la vitesse de rotation du moteur (Ne) - la vitesse de rotation du moteur (Ne) qui a été obtenue une fois que la condition d'apprentissage prédéterminée a été satisfaite durant la condition engagée de l'embrayage quand le stade de changement de vitesses dans une transmission (30) est changé à l'autre stade de changement de vitesse dans la transmission (30), par une vitesse de rotation du moteur (Ne) - la vitesse de rotation du moteur (Ne) qui a été obtenue une fois que la condition d'apprentissage prédéterminée a été satisfaite pendant qu'un véhicule démarre et a été enregistrée.

5. Dispositif de commande d'embrayage selon l'une quelconque des revendications 1 à 3, dans lequel l'unité de calcul de coefficient de correction (50) corrige le coefficient de correction (Kh) en multipliant le coefficient de correction (Kh) par une valeur calculée en divisant une valeur moyenne des vitesses de rotation du moteur (Ne_change) - la valeur moyenne des vitesses de rotation du moteur (Ne_change) qui a été obtenue une fois que la condition d'apprentissage prédéterminée a été satisfaite durant la condition engagée de l'embrayage quand le stade de changement de vitesses dans une transmission (30) est changé à l'autre stade de changement de vitesse dans la transmission (30), par une valeur moyenne des vitesses de rotation du moteur (Ne_start) - la valeur moyenne des vitesses de rotation du moteur (Ne_start) qui a été obtenue une fois que la condition d'apprentissage prédéterminée a été satisfaite pendant qu'un véhicule démarre et a été enregistrée.

# FIG. 1

IG SW 11

ECU 50

20

23
25
22
24
26
33

16

41
32

17

31
27
28
21b
10a
21 29
21a

10

30

# F I G. 2

# F I G. 3

Time unit

# F I G. 4 A

# F I G. 4 B

# F I G. 5

Legend:
- Reference map
- Actual map
- Learning map
- Learning point

Clutch stroke

0 T2

Clutch torque

# FIG. 6

# FIG. 7

# FIG. 8A

# FIG. 8B